Europäisches Patentamt

European Patent Office

Office européen des brevets

(11) Publication number: **0 571 823 A1**

# EUROPEAN PATENT APPLICATION

(21) Application number: 93107747.3

(22) Date of filing: **12.05.93**

(51) Int. Cl.⁵: **C09D 5/08**, C09D 163/00,
C08K 13/02

(30) Priority: **28.05.92 US 890746**

(43) Date of publication of application:
**01.12.93 Bulletin 93/48**

(84) Designated Contracting States:
**DE FR GB NL**

(71) Applicant: **Hughes Aircraft Company**
**7200 Hughes Terrace,**
**P.O. Box 80028**
**Los Angeles, California 90080-0028(US)**

(72) Inventor: **Oldham, Susan L.**
**5214 Steveann Street**
**Torrance, California 90503(US)**
Inventor: **Prior, Desiree S.**
**5551 West 78th Street**
**Westchester, California 90045(US)**

(74) Representative: **KUHNEN, WACKER &**
**PARTNER**
**Alois-Steinecker-Strasse 22**
**D-85354 Freising (DE)**

(54) **Corrosion resistant primer.**

(57) Zinc pigments combined with an epoxy-based binder to produce a non-chromated primer formulation that is free of volatile organic compounds and provides corrosion resistance on metal surfaces. The formulation comprises an epoxy resin and hardener in substantially stoichiometric amount, together with a mixture of zinc pigments, the first comprising a chelating zinc phosphate pigment and the second comprising a zinc salt of an organonitro compound. The ratio of the zinc phosphate to the organonitro compound ranges from about 85:15 to 95:5. The total amount of zinc pigment in the primer formulation of the invention is at least about 3 parts per hundred of the resin (phr).

## BACKGROUND OF THE INVENTION

### 1. Field of the Invention

The present invention relates generally to an epoxy-based primer system, and, more particularly, to such systems which provide corrosion protection of metal surfaces.

### 2. Description of the Background Art

In the fabrication of metal structures, a primer is typically applied to the surface of the metal to promote adhesion and to provide corrosion protection to the metal surfaces. The corrosion protection is particularly important where dissimilar metals are brought into contact because the galvanic couple between the metals produces accelerated corrosion.

The primer may be used in a wet installation process in which the metal part, such as an insert, is dipped in the primer and then installed into a second metal part while the primer is wet. In addition, the primer may be used as a touch-up primer which is applied to a scratched area on a metal surface that is already coated with a primer material.

The formulation of corrosion-resistant epoxy primers has taken one of two approaches. In the first approach, hexavalent chromium-containing pigments in solvated resin binders have been used, as described, for example, in MIL-P-23377, "Military Specification, Primer Coatings: Epoxy, Chemical and Solvent Resistant". In the second approach, non-chromated pigments in either low volatile organic compound (VOC) or water-reducible binders have been used, as described, for example, in U.S. Patent 4,495,317 to Albers for "Water Reducible Epoxy Coating Composition".

In terms of the former approach, the use of carcinogenic pigments and ozone-depleting solvents not only poses a health hazard to the employees using these materials, but also hazardous waste disposal, the lack of compliance with the regulations of the South Coast Air Quality Management District (SCAQMD), and the effects of environmental pollution are costly issues that need to be minimized. Moreover, the use of non-reactive diluents in these primer formulations, for the purpose of keeping the high viscosity resins sufficiently fluid for application to hardware, is a superficial solution to the resin viscosity problem, since the solvent will eventually evaporate. When this occurs, the primer can be re-diluted, increasing VOC usage, or heated to make the material more fluid. This heating shortens the pot life of the primer. In addition, production personnel typically have other processibility problems with these primers, such as excessive flow resulting from the low diluted viscosity, and difficulty in preparing the primer formulation itself, due to the poor dispersibility of the chromated pigments.

The prior art approach of using non-chromated pigments in low VOC or water reducible epoxy binders has several disadvantages. The incorporation of any VOC containing diluents contributes to the environmental and solvent evaporation problems discussed above. The bulk of the water reducible primer materials are formulated using emulsifiers and low molecular weight curing agents. In general, these epoxy primers generally suffer from poor solvent and fluid resistances, inadequate flexibility, and drying and adhesion problems. In terms of the materials used to replace the hexavalent chromium-containing materials, zinc pigments are combined with iron oxides, siliceous extenders, titanium dioxide, and/or molybdate compounds. These additional pigments increase the primer weight, which is a significant disadvantage for space-based and airborne hardware. The high overall pigment loading increases primer viscosity, requiring higher dilution. This exacerbates the previously discussed VOC usage or drying problems.

Thus, a need remains for a corrosion-resistant, non-chromated primer without volatile organic compounds.

## SUMMARY OF THE INVENTION

In accordance with the invention, zinc pigments are combined with an epoxy-based binder to produce zero-VOC, non-chromated primers that provide corrosion resistance to metal surfaces.

The formulation employed in the practice of the invention comprises an epoxy resin and hardener in substantially stoichiometric amount, together with a mixture of zinc pigments, the first comprising a chelating zinc phosphate pigment and the second comprising a zinc salt of an organonitro compound. The ratio of the zinc phosphate to the organonitro compound ranges from about 85:15 to 95:5. The total amount of zinc pigment in the primer formulation of the invention is that amount required to provide corrosion resistance, or at least about 3 parts per hundred of the resin.

Utilization of the non-chromated, solvent-free primer system disclosed herein for the corrosion protection of metals results in a marked improvement in critical material performance properties and worker safety over the previously-employed chromated, solvated primer material. The present invention provides lower outgassing, longer pot life, and better processibility than the chromated material, with equivalent adhesion, uniformity, and corrosion resistance. In addition, utilization of the teachings of this invention benefits the environment by reducing hexavalent chromium and ozone-depleting chemical emissions.

## DESCRIPTION OF THE PREFERRED EMBODIMENTS

The formulation employed in the practice of the present invention comprises an epoxy resin and hardener in stoichiometric amount, together with a mixture of zinc pigments, the first comprising a chelating zinc phosphate pigment and the second comprising a zinc salt of an organonitro compound.

Any of the well-known epoxy resins having the following properties may be employed in the practice of the invention: (a) resins having a low viscosity (defined herein as about 800 centipoise or less); (b) resin cure substantially unaffected by filler; (c) resin cure at room temperature or at moderate temperatures (defined herein as 250°F, or 121°C or lower); and (d) resins free of solvents. Examples include EPON 815, EPON 825, and EPON 828. The EPON resins are available from Shell Chemical Company. EPON 815 is a mixture of diglycidyl ether of bisphenol A (DGEBA) and a mono-epoxide diluent of butyl glycidyl ether, specifically, 88% DGEBA and 11 wt% butyl glycidyl ether. Other reactive diluents may be used to decrease the viscosity of DGEBAs. Such diluents include cresyl glycidyl ether (CGE), phenyl glycidyl ether (PGE), neodol glycidyl ether (NGE), and diglycidyl ethers of resorcinol. EPON 825 is 100% DGEBA; this epoxy is one having a low equivalent weight and is one of the lowest viscosity, undiluted DGEBA's commercially available. EPON 828 is 100% liquid DGEBA resin having a higher equivalent weight than EPON 825.

Additional preferred epoxy-based resins include glycidyl aromatic amines, as disclosed in U.S. Patent 4,681,718, and epoxy silanes, as disclosed in U.S. Patent 4,861,901.

Any of the well-known hardeners employed in conjunction with the resin may be used in the practice of the invention, in their customary stoichiometric or near-stoichiometric amounts. Examples include VERSAMID 125 and VERSAMID 140, which are polyamide hardeners available from Henkel Corporation, Kankakee, Illinois. Other suitable hardeners include aliphatic amines, such as triethylenetetramine, diethylene triamine, and aminoethylpiperazine, aliphatic amines that have been adducted with ethylene oxide, phenol, and the like, and polycarboxylic acid anhydrides (for moderate temperature curing).

Preferably, an ambient temperature curing hardener is employed.

The chelating zinc pigment comprises $Zn_3(PO_4)_2 \cdot 2H_2O$ and is commercially available as SICOR ZNP/S or ZNP/M; the organonitro compound comprises an electrochemically active zinc salt of (OH) and ($NO_2$) substituted benzoic acid, described in U.S. Patent 5,043,373, issued August 27, 1991, and commercially available as SICORIN RZ. Both pigments are available from BASF.

The ratio of the zinc phosphate to the organonitro compound ranges from about 85:15 to 95:5. The minimum total amount of zinc pigment in the primer formulation of the invention is that amount required to provide corrosion resistance, or at least about 3 parts per hundred of the resin (phr). The maximum total amount of zinc pigment in the primer formulation is that amount that will provide appropriate viscosity for processibility. In the epoxy systems specifically described herein, that maximum amount is about 34 phr.

As pigment content is increased, resin viscosity will increase. The maximum pigment loading will be either: (1) the highest usable viscosity or (2) the highest concentration of pigment that provides the desired property, i.e., corrosion resistance. Generally, a critical pigment concentration will be obtained, where additional pigment either degrades performance or does not further increase performance. Thus, for a given resin system, the amount of pigment will differ, depending on the resin used. The determination of the resin and pigment concentrations does not require undue experimentation; see, e.g., "Handbook of Epoxy Resins", N. Lee and K. Neville, McGraw-Hill, page 149.

The primer is applied to metal parts, employing any of the common techniques for applying primer, such as spraying, brushing, and the like. The metal parts advantageously primed in accordance with the invention include magnesium, aluminum, any of the steels, beryllium, and titanium. Because of the poor corrosion resistance of magnesium, parts made from this metal are especially benefitted from the use of the touch-up primer of the invention.

If the primer is sprayed onto the metal surface, the preferred total concentration of the zinc pigments ranges from about 7 to 10 phr. If the primer is brushed onto the metal surface, the preferred total concentration of the zinc pigments ranges from about 10 to 17 phr.

The brushable versions exhibit increased processibility (in terms of the primer remaining on the metal part versus dripping off) compared to the chromated material. Due to the ease of dispersion of the zinc

3

pigments, both sprayable and brushable versions exhibit increased ease of mixing over the prior art chromated primers. In addition, the primers of the invention remain fluid at ambient temperature. Moreover, these primers exhibit lower outgassing and longer pot life than the chromated materials and are less labor intensive to prepare.

## EXAMPLES

### Example 1

Table I below lists the formula of the chromated, solvated, epoxy-polyamide touch-up primer currently employed in the prior art (Formulation 1), as well as the composition of seven non-chromated primers (Formulations 2-8) that were formulated and evaluated. In order to eliminate the toluene, and hence remove the VOC-containing solvent from the primer, mixtures of EPON 815 and EPON 828 were also utilized in the primers as the base resin in place of 100% EPON 825. While all of these Shell Chemical Company resins are diglycidyl ethers of bisphenol A, only EPON 825, being the purest of the three, solidifies. In addition, EPON 815 has the lowest viscosity of the three, since it contains butyl glycidyl ether (BGE) as a reactive diluent. BGE is not considered to be a VOC-containing material, since it reacts with the resin instead of merely thinning it. In addition, the use of BGE does not degrade the outgassing performance of the cured material in the same way that a non-reactive diluent such as toluene can.

Table I.

| Primer Formulations. | | | | | | | | |
|---|---|---|---|---|---|---|---|---|
| Components | Mix Ratio (parts per hundred resin) | | | | | | | |
| | 1 | 2 | 3 | 4 | 5 | 6 | 7 | 8 |
| EPON 825 | 100 | 100 | -- | -- | -- | -- | -- | -- |
| EPON 828 | -- | -- | 90 | 85 | 85 | 85 | 85 | 85 |
| EPON 815 | -- | -- | 10 | 15 | 15 | 15 | 15 | 15 |
| Toluene | 6.67 | -- | -- | -- | -- | -- | -- | -- |
| Strontium chromate | 3.33 | -- | -- | -- | -- | -- | -- | -- |
| SICORIN RZ | -- | 0.33 | 0.33 | -- | 0.33 | 0.67 | 1.00 | 1.67 |
| SICOR ZNP/S | -- | 3.00 | 3.00 | -- | 3.00 | 6.00 | 9.00 | 15.0 |
| VERSAMID 140 | 66.7 | 71 | 71 | 71 | 71 | 71 | 71 | 71 |

Formulations were prepared using 100% EPON 825 and two resin blend ratios (90:10 and 85:15) of EPON 828 to EPON 815. When 100% EPON 825 was utilized, this solid resin was first warmed up to liquify it, then cooled down to obtain accurate mix weights. The VERSAMID 140 polyamide hardener was employed at ±7% of stoichiometric amount for all of the materials.

In the practice of the invention, the strontium chromate of Formulation 1 (prior art material) was replaced with a combination of two zinc pigments in the materials. The chelating zinc phosphate pigment, SICOR ZNP/S, was used in a 90:10 weight ratio with the electrochemically active zinc salt of an organonitro compound, SICORIN RZ.

When 100% EPON 825 and the 90:10 weight ratio of EPON 828 to EPON 815 were employed (Formulations 2 and 3, respectively); the filler mix was ball milled for twenty-four hours into the base resin. This ball milling procedure was used in the preparation of the Formulation 1 primer due to the poor dispersibility of the strontium chromate. Since the zinc pigments were found to be easily dispersible, they were incorporated into the 85:15 weight ratio mixes of EPON 828 to EPON 815 (Formulations 4-8) by either stirring them in by hand (for small batches) or by using a Jiffy mixer (for large batches). A Jiffy mixer is a propeller blade that, when fitted into a drill press type assembly, provides rotational action to stir the material. This type of mixing cannot break up particular agglomerates the way a ball mill does. Filler loading levels of the primers were selected on the basis of increasing viscosity compared to Formulation 1 while maintaining brushability and extrudability. A cycle time management analysis of the preparation of Formulation 1 and Formulation 8 primers ("old" and "new", process, respectively), is given below:

**Old Process**

| Liquify resin |
| --- |

↓

| Set up ball mill |
| --- |

↓

| Ball mill pigments into resin |
| --- |

↓

| Clean ball mill |
| --- |

↓

**Process of the Invention**

| Mix toluene, hardener into resin/pigment blend |
| --- |

↓

| Degas |
| --- |

↓

| Package |
| --- |

↓

| Freeze |
| --- |

| Mix resin, new pigments, and hardener |
| --- |

↓

| Degas |
| --- |

↓

| Package |
| --- |

↓

| Freeze |
| --- |

Viscosity was measured on the chromated prior art primer, all of the uncatalyzed non-chromated primers, and on selected catalyzed primer formulations; the results are listed in Table II.

5

Table II.

| Viscosity Investigation. | | | | | |
|---|---|---|---|---|---|
| Formulation | Uncatalyzed Viscosity (cp) | | | | Initial Catalyzed Viscos. |
| | Initial | 1 day | 2 day | 4 day | |
| 1 | 1290 | 1430 | --- | solid | 3112 |
| 2 | 5250 | 9230 | 9800 | solid | --- |
| 3 | 9110 | 12200 | 12200 | 12200 | 6620 |
| 4 | 6500 | 11300 | 12100 | --- | --- |
| 5 | 10800 | 12300 | 13400 | --- | --- |
| 6 | 11300 | 12500 | 13700 | --- | --- |
| 7 | 13300 | 13700 | 14100 | --- | 11600 |
| 8 | 13500 | 13900 | 14500 | --- | 12200 |
| Notes: Formulation 1 is the chromated prior art primer. Formulation 8 is the most preferred in the practice of the invention. | | | | | |

Measurement was performed at ambient temperature as specified in ASTM D2393 (Test Method for Viscosity of Epoxy Resins and Related Components), using a Brookfield model RVF viscometer. The sample size used was 100 milliliters. All of the formulations containing the mixture of EPON 828 and EPON 815 possessed higher viscosities than the toluene-containing control. While the EPON 825 based formulations (Formulations 1 and 2) solidified between two and four days at ambient temperature as expected, the 90:10 weight mixture of EPON 828 to EPON 815 (Formulation 3) did not. In addition, the viscosity of Formulation 3 stabilized within twenty-four hours. Stabilization times were not determined for the other formulations. The preferred formulation (Formulation 8) was chosen on the basis of it having the highest filler loading while maintaining a brushable, extrudable viscosity greater than the prior art primer (Formulation 1). From Table I, it can be seen that Formulation 8 contains five times the weight of corrosion inhibiting pigment as Formulation 1.

Example 2.

The following additional tests were performed on Formulation 8: Hegman dispersion index, pot life, adhesion, outgassing, thermal analysis, and shelf life. (Corrosion resistance testing is described in Example 3, below.) The Hegman dispersion index, which is an indication of the fineness of grind, was measured in accordance with ASTM D1210 (Test Method for Fineness of Dispersion of Pigment-Vehicle Systems). Pot life was determined to be the time period by which the primer exhibited brushability and the ability to flow out to produce a dry film thickness of less than or equal to 0.005 inch. Adhesion was determined via tape testing of a twenty-four hour room temperature cured thin film of the primer. Outgassing was performed in accordance with ASTM E595 (Total Mass Loss and Collected Volatile Condensible Materials from Outgassing in a Vacuum Environment) on seven or eight day cured material. Thermal analysis was performed using differential scanning calorimetry (DSC) to determine enthalpy ($\Delta H$), glass transition temperature ($T_g$), and decomposition temperature ($T_d$) of Formulations 8 and 1. The extent of cure ($E_c$) for these materials was determined by subtracting the ratio of residual cure enthalpy to total cure enthalpy from 1 and multiplying this difference by 100. The shelf life of the frozen premix ("fromix") and two-part kit was performed by rerunning viscosity, outgassing, pot life, adhesion, and dispersion index on four month old material for the fromix and six month old material for the two-part kit, respectively, and comparing the results to the required values, shown in Table III below. This Table gives the initial and shelf life data for Formulation 8 for both the fromix and the two-part kit.

Table III.  Non-Chromated Touch-Up Primer

Shelf Life Results.

| Property | Requirement | Shelf Life Results | | |
|---|---|---|---|---|
| | | Initial | 4 Month Old Fromix | 6 Month Old Kit |
| Hegman Dispersion Index | >5 | 6-7 | 6-7 | 6-7 |
| Viscosity | --- | 12,200 | 10,100 | 12,200 |
| Pot life | ≥3 hrs. | >4 hrs | 3 hrs. | 3 hrs. |
| Adhesion | No delamination or separation after 24 hrs. | Pass | Pass | Pass |
| TML[a] | <3.0% | 2.09%[e] | 2.91%[f] | 2.59%[f] |
| CVCM[b] | <0.1% | 0.01%[e] | 0.01%[f] | 0.01%[f] |
| WVR[c] | --- | 0.68%[e] | 0.94%[f] | 1.06%[f] |

7

VCM[d] Ap-
pearance            ---            v.[g] light  light        light

                                    trace[e]    trace[f]     trace[f]

Notes:     (a) TML = Total mass loss

           (b) CVCM = Collectable volatile condensable ma-

               terial

           (c) WVR = Water vapor recovery

           (d) VCM = volatile condensable material

           (e) 8 day value

           (f) 7 day value

           (g) v. = very

===============================================================

Initially mixed, four month old fromix, and six month old kit material met or exceeded the specification requirements for Hegman dispersion index, pot life, outgassing, and adhesion. Initially mixed primer of Formulation 8 exhibited 39% lower total mass loss (TML), 75% lower collectable volatile condensable material (CVCM), and 50% longer pot life than a newly mixed batch of primer of Formulation 1 (pot life = 2 hours, TML = 3.41%, CVCM = 0.04%, WVR = 0.89%). Trials using production personnel applying fromix of Formulation 8 on demonstration hardware showed that the primer exhibited increased processibility in terms of ease of handling and application, compared to the prior art primer.

Table IV below gives the results of the thermal analysis of both the prior art primer and the primer of the present invention.

Table IV.

| Thermal Analysis Results for Chromated and Non-Chromated Touch-Up Primer. | | | | | |
|---|---|---|---|---|---|
| Primer Type | Cure Condition | $\Delta H^a$ (J/g) | $E_c{}^b$ (%) | $T_g{}^c$ ($^\circ$C) | $T_g{}^d$ ($^\circ$C) |
| Prior Art | uncured | 292 | 0 | --- | --- |
|  | 7 days/21$^\circ$C | 5 | 98 | 33/58 | 253 |
|  | 4 hrs/71$^\circ$C | 11 | 96 | 79/99 | 200 |
| Formulation 8 | uncured | 308 | 0 | --- | --- |
|  | 7 days/RT[e] | 25 | 92 | 51/62 | 260 |
|  | 4 hrs/71$^\circ$C | 7 | 98 | 77/80 | 210 |

Notes:
(a) $\Delta H$ = enthalpy
(b) $E_c$ = extent of cure
(c) $T_g$ = glass transition temperature
(d) $T_d$ = glass decomposition temperature
(e) RT = room temperature

Both primers demonstrated an essentially equivalent cured condition when both elevated and ambient temperature curing were employed.

Example 3.

Corrosion resistance testing was performed by exposing a magnesium chassis which contained corrosion resistant steel (CRES) inserts primed with Formulation 8 primer to eleven temperature and humidity cycles. In particular, the magnesium chassis was electroless nickel-plated on all areas except for the holes where the CRES fasteners were to be installed. The chassis was cleaned as follows: (1) a bristle brush was used to remove debris; (2) the unit was rinsed with deionized water; (3) the unit was oven-dried at 71±3°C for 2 hours; (4) the unit was rinsed with iso-propanol; (5) Dow 19 conversion coating was applied in accordance with MIL-M-3171, Type VI; and (6) the unit was dried in a vacuum oven at 71°C and 2 psia (14 kilopascals). The CRES fasteners were installed as follows: (1) Formulation 8 primer was applied in a thin film to the inserts of one row using a #4 bristle brush and cured at 71°C for 2 hours (labeled as Row 1); (2) only Dow 19 was applied in a thin film to a second row prior to the installation of the inserts (labeled as Row 2); and (3) Formulation 8 primer was applied as a thin film to the third row of inserts and allowed to cure at ambient temperature for seven days (labeled as Row 3). The assembly was then exposed to the eleven temperature and humidity cycles per the following: (1) the humidity was held at 95% RH and the temperature was cycled from 24°C to 66°C to -11°C; (2) the ramp-up time from 24°C to 66°C was 35 minutes; (3) the ramp-down time from 66°C to -11°C was 45 minutes; (4) the ramp-up time from -11°C to 66°C was 75 minutes; and the time held at 66°C and -11°C was 30 minutes and 15 to 30 minutes, respectively.

Upon completion of this temperature/humidity cycling, the chassis was removed from the chamber and examined at magnifications up to 65X for the presence of corrosion. No corrosion was found at any of the inserts for all three conditions. Limited corrosion was found in Row 2 on areas away from the inserts. Since previous experience with the prior art primer demonstrated equivalent performance in terms of corrosion protection under these conditions, the touch-up primer of the invention can be used to provide the required corrosion protection in the bimetallic couple of a CRES insert and magnesium chassis when treated with Dow 19.

Thus, there has been disclosed a corrosion resistant primer which is free of chromates and volatile organic compounds. It will be appreciated by those skilled in the art that various modifications and changes of an obvious nature may be made without departing from the scope of the invention, and all such modifications and changes are intended to fall within the scope of the invention, as defined by the appended claims.

## Claims

1. A corrosion-resistant primer formulation free of chromate and volatile condensable organic compounds for priming a metal, comprising an epoxy resin and hardener in substantially stoichiometric amount, together with at least two zinc pigments, a first zinc pigment comprising a chelating zinc phosphate pigment and a second zinc pigment comprising a zinc salt of an organonitro compound.

2. The formulation of Claim 1 wherein the ratio of said zinc phosphate to said organonitro compound ranges from about 85:15 to 95:5.

3. The formulation of Claim 2 wherein said zinc phosphate comprises $Zn_3(PO_4)_2 \cdot 2H_2O$.

4. The formulation of Claim 2 wherein said organonitro compound comprises a zinc salt of $(OH)$ and $(NO_2)$ substituted benzoic acid.

5. The formulation of Claim 1 wherein the total amount of zinc pigment in said primer formulation is at least about 3 parts per hundred of said resin.

6. The formulation of Claim 1 wherein said metal is selected from the group consisting of magnesium, aluminum, steel, beryllium, and titanium.

7. The formulation of Claim 1 wherein said epoxy resin is selected from the group consisting of diglycidyl ether of bisphenol A, glycidyl aromatic amines, and epoxy silanes and wherein said hardener is

EP 0 571 823 A1

selected from the group consisting of polyamides, aliphatic amines, aliphatic amine adducts, and polycarboxylic acid anhydrides.

8. A method of priming a metal with a corrosion-resistant primer comprising applying to said metal a coating of the formulation of Claim 1.

9. The method of Claim 8 wherein said formulation is sprayed onto said metal and wherein the total concentration of said zinc primers ranges from about 7 to 10 phr.

10. The method of Claim 8 wherein said formulation is brushed onto said metal and wherein the total concentration of said zinc primers ranges from about 10 to 17 phr.

11. The method of Claim 8 wherein said metal is coated with an initial primer having a scratch therein, and said formulation is applied to said scratch.

10

| | DOCUMENTS CONSIDERED TO BE RELEVANT | | EP 93107747.3 |

| Category | Citation of document with indication, where appropriate, of relevant passages | Relevant to claim | CLASSIFICATION OF THE APPLICATION (Int. Cl.5) |
|---|---|---|---|
| A | FR - A - 2 660 928 (ETAT FRANCAIS) * Claims; examples * -- | 1 | C 09 D    5/08 C 09 D  163/00 C 08 K   13/02 |
| A | EP - A - 0 289 155 (IMPERIAL CHEMICAL INDUSTRIES) * Claims; examples * ---- | 1 | |

TECHNICAL FIELDS SEARCHED (Int. Cl.5)

C 09 D    5/00
C 09 D  163/00
C 08 K

The present search report has been drawn up for all claims

| Place of search | Date of completion of the search | Examiner |
|---|---|---|
| VIENNA | 27-08-1993 | PAMMINGER |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document